# EUROPEAN PATENT APPLICATION

(11) **EP 1 947 030 A1**
(43) Date of publication of application: **23.07.2008**
(21) Application number: 07001157.2
(22) Date of filing: 19.01.2007
(51) Int. Cl.: B65D 81/38, F25D 3/08, F25D 31/00, A47J 41/00

(54) **Thermo-preserving container**

(71) Applicant: Yang, Heng-Te, Tainan City (TW)
(72) Inventor: Yang, Heng-Te, Tainan City (TW)
(74) Representative: Zeitler, Giselher

(57) **Abstract**

A thermo-preserving container includes a body (1) and a cap. The body (1) consists of an annular inner wall (10), an annular outer wall (11), a coolant (12) capable of being filled in an annular empty space (S) defined between the annular inner wall (10) and the annular outer wall (11), an intake (13) in a bottom thereof, a stopper (14) inserted in the intake (13), an annular connect member (15) in an upper end thereof, and a chamber (17) in an inner hollow thereof. The cap (2) is provided with an annular connect member (20) formed at a bottom end thereof, and a chamber (22) disposed in an inner hollow thereof. The body (1) and the cap (2) can be combined together tightly by engaging the annular connect member (20) of the cap (2) with the connect member (15) of the body (1), thus enabling liquors, drinks, or food to be kept in the thermo-preserving container in a cooled condition longer to increase the cool taste in drinking or eating.

## Description

### BACKGROUND OF THE INVENTION

### 1. Field of the Invention

This invention relates to a thermo-preserving container, particularly to one preserving liquors, drinks, or food in a low temperature, convenient to carry so that the content kept therein may taste comparatively cool and fresh.

### 2. Description of the Prior Art

Common drinks, liquors or refreshments are to be kept in a refrigerator to be cooled for some degrees or to be added with ice cubes, if it is wanted to taste cool and fresh for drinking with pleasant perception and feeling. However, if it is added with ice cubes for cooling a drink or refreshment, it may taste rather thin, losing the original flavor, and moreover, after the drink is taken out of the refrigerator, it will soon become warmer gradually under the room temperature, not tasting cool and fresh. Or a drink may be carried in a large thermo-preserving box filled with ice for keeping the drink cool, but the thermo-preserving box may be a little too large to carry along, not convenient to use.

### SUMMARY OF THE INVENTION

This invention has been devised to offer a thermo-preserving container that can keep liquors, drinks or food in a low temperature to taste cool and fresh, in addition to being handy to carry along.

The feature of the invention is a body consisting of an annular inner wall, an annular outer wall, a coolant capable of being filled in an annular empty space defined between the annular inner wall and the annular outer wall, an intake formed in a bottom thereof in communication with the annular empty space, a stopper inserted in the intake, an annular connect member formed in an upper end thereof, and a chamber disposed in an inner hollow thereof; and,
a cap provided with an annular connect member formed at a bottom end thereof, and a chamber disposed in an inner hollow thereof.

### BRIEF DESCRIPTION OF DRAWINGS

This invention will be better understood by referring to the accompanying drawings, wherein:
Figure 1 is an exploded perspective view of a first embodiment of a thermo-preserving container in the present invention;
Figure 2 is a cross-sectional view of the first embodiment of the thermo-preserving container of the in the present invention, showing a wine bottle kept in the container;
Figure 3 is an exploded perspective view of a second embodiment of a thermo-preserving container in the present invention; and,
Figure 4 is a cross-sectional view of the second embodiment of a thermo-preserving container in the present invention, showing food kept therein.

### DETAILED DESCRIPTION OF THE PREFERRED EMBODIMENT

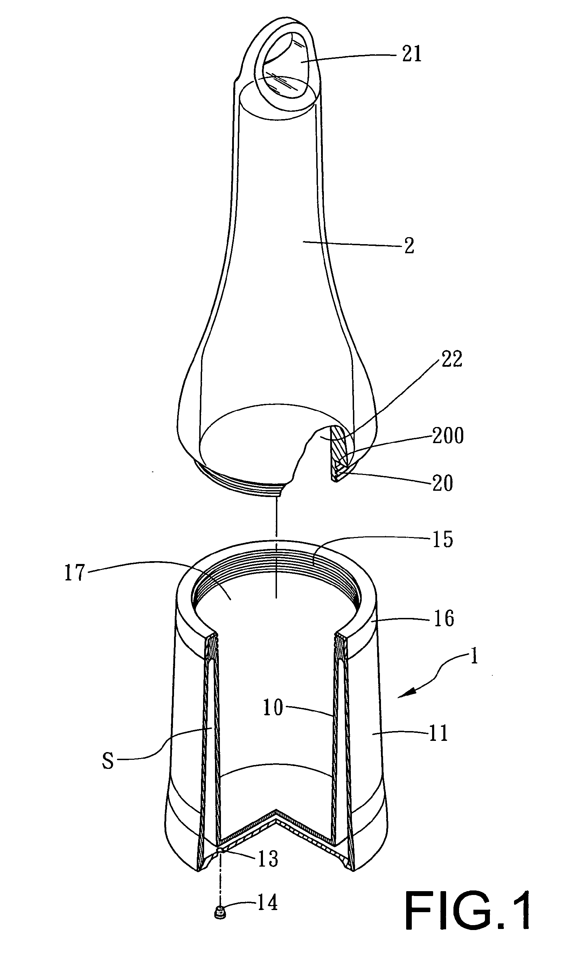

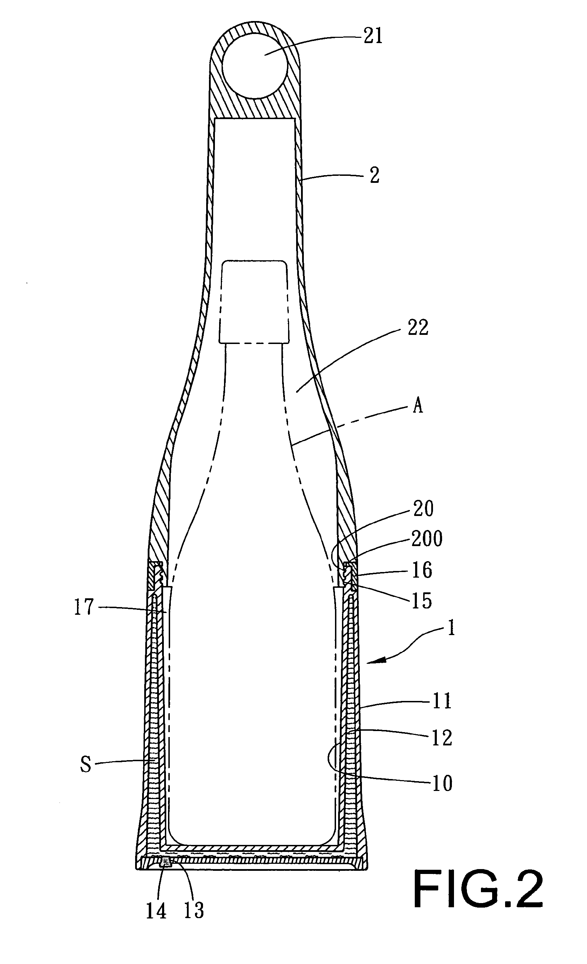

A first embodiment of a thermo-preserving container in the present invention, as shown in Figs. 1 and 2, includes a body 1 and a cap 2 threadably combined on the body 1.

The body 1 consists of an annular inner wall 10, an annular outer wall 11, a coolant 12, an intake 13, a stopper 14, an annular connect member 15, an annular decorative member 16 and a chamber 17. The coolant 12 composed of a proper amount of a sterilizer (LXE), an anti-fungi agent (XB-2), N1BR1ME and water mixed together is capable of being filled in an annular empty space (S) defined between the annular inner wall 10 and the annular outer wall 11. The intake 13 is formed in a bottom of the body 1 in communication with the annular empty space (S). The stopper 14 is inserted in the intake 13 after the coolant 12 is filled in the annular empty space (S) through the intake 13. The annular connect member 15 with female threads is formed in an upper end of the body 1. The annular decorative member 16 is disposed on an outer portion of the upper end of the body 1, made of different material or colored differently from the body 1. The chamber 17 is disposed in an inner hollow of the body 1.

The cap 2 in a cone shape is provided with an annular connect member 20 formed at a bottom end thereof, a grip hole 21 formed in an upper end thereof, and a chamber 22 disposed in an inner hollow thereof. The annular connect member 20 with male threads is capable of being engaged with the female threads of the annular connect member 15 of the body 1. An annular connect edge 200 formed on an upper end of the annular connect member 20 is capable of just resting against an upper surface of the decorative member 16 when the male threads of the annular connect member 20 and the female threads of the annular connect member 15 are engaged together.

In using the first embodiment of the thermo-preserving container, firstly place the body 1 in a refrigerator. Secondly, take out the body 1 from the refrigerator as soon as the coolant 12 of the body 1 is frozen. Thirdly, put a wine bottle (A) with wine in the chamber 17 of the body 1. Finally, close the cap 2 on the body 1 by engaging the male threads of the annular connect member 20 of the cap 2 with the female threads of the annular connect member 15 of the body 1, with the annular connect edge 200 of the annular connect member 20 just resting against the upper surface of the decorative member 16, thus enabling the body 1 and the cap 2 to be combined together tightly to keep the wine in the wine bottle (A) in a low temperature for a longer time so as to increase the cool taste in drinking. Moreover, the body 1 combined together with the cap 2 can be carried conveniently with a hand by inserting a finger in the grip hole 21 of the cap 2.

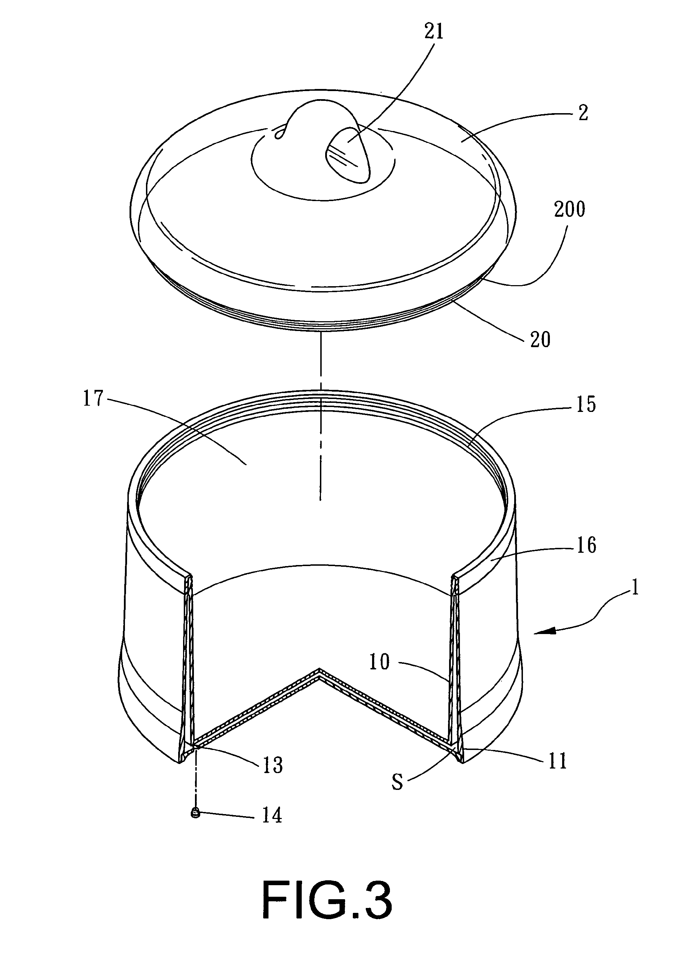

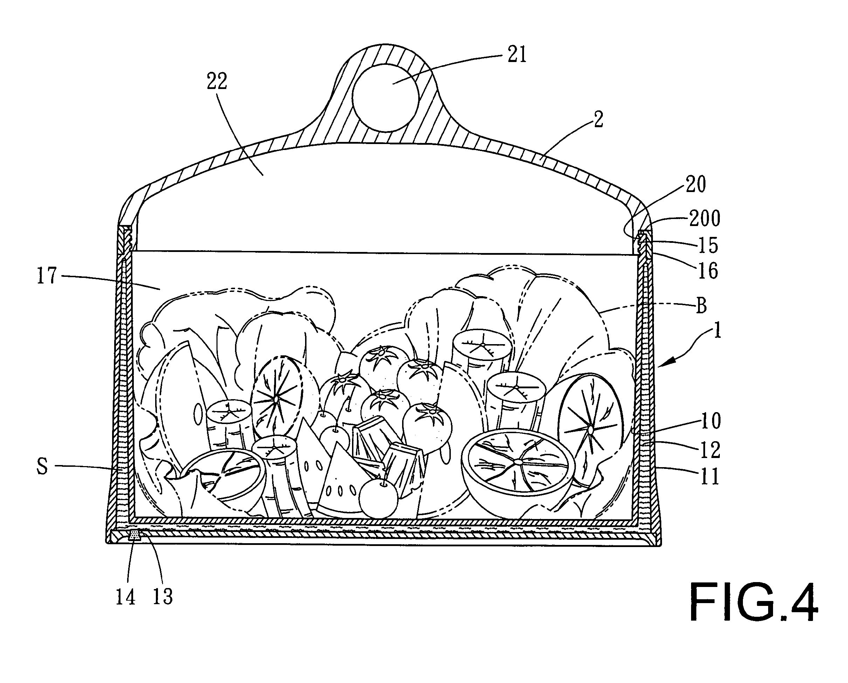

Next, a second embodiment of a thermo-preserving container in the invention is shown in Figs. 3 and 4, which includes a body 1 and a cap 2 threadably combined on the body 1.

The body 1 in a cylindrical shape with a rather large diameter also consists of an annular inner wall 10, an annular outer wall 11, a coolant 12, an intake 13, a stopper 14, an annular connect member 15, an annular decorative member 16 and a chamber 17. The coolant 12 is capable of being filled in an annular empty space (S) defined between the annular inner wall 10 and the annular outer wall 11. The intake 13 is formed in a bottom of the body 1 in communication with the annular empty space (S). The stopper 14 is inserted in the intake 13 after the coolant 12 is filled in the annular empty space (S) through the intake 13. The annular connect member 15 with female threads is formed in an upper end of the body 1. The annular decorative member 16 is disposed on an outer portion of the upper end of the body 1. The chamber 17 is disposed in an inner hollow of the body 1.

The cap 2 in a flat shape is provided with an annular connect member 20 formed at a bottom end thereof, a grip hole 21 formed in an upper end thereof, and a chamber 22 disposed in an inner hollow thereof. The annular connect member 20 with male threads is capable of being engaged with the female threads of the annular connect member 15 of the body 1. An annular connect edge 200 formed on an upper end of the annular connect member 20 is capable of just resting against an upper surface of the decorative member 16 when the male threads of the annular connect member 20 and the female threads of the annular connect member 15 are engaged together.

In using the second embodiment of the thermo-preserving container, firstly place the body 1 in a refrigerator. Secondly, take out the body 1 from the refrigerator as soon as the coolant 12 of the body 1 is frozen. Thirdly, put fresh fruit or vegetable (B) in the chamber 17 of the body 1. Finally, close the cap 2 on the body 1 by engaging the male threads of the annular connect member 20 of the cap 2 with the female threads of the annular connect member 15 of the body 1, with the annular connect edge 200 of the annular connect member 20 just resting against the upper end of the decorative member 16, thus enabling the body 1 and the cap 2 to be combined together tightly to keep the fresh fruit or vegetable (B) preserved cool and fresh in a low temperature for a longer time so as to increase the cool taste in eating and good hygiene. Moreover, the body 1 combined together with the cap 2 can be carried conveniently with a hand by inserting a finger in the grip hole 21 of the cap 2.

While the preferred embodiments of the invention have been described above, it will be recognized and understood that various modifications may be made therein and the appended claims are intended to cover all such modifications that may fall within the spirit and scope of the invention.

## Claims

1. A thermo-preserving container comprising:
a body (1);
a cap (2) combined on said body (1); and,
**characterized by** said body (1) consisting of an annular inner wall (10), an annular outer wall (11), a coolant (12) capable of being filled in an annular empty space (S) defined between said annular inner wall (10) and said annular outer wall (11), an intake (13) formed in a bottom thereof in communication with said annular empty space (S), a stopper (14) inserted in said intake (13), an annular connect member (15) formed in an upper end thereof, and a chamber (17) disposed in an inner hollow thereof; and,
said cap (2) provided with an annular connect member (20) formed at a bottom end thereof, and a chamber (22) disposed in an inner hollow thereof.

2. The thermo-preserving container as claimed in Claim 1, wherein said coolant (12) is a mixer of a sterilizer (LXE), an anti-fungi agent (XB-2), N1 BR1 ME and water.

3. The thermo-preserving container as claimed in Claim 1, wherein said annular connect member (15) of said body (1) is provided with female threads.

4. The thermo-preserving container as claimed in Claim 1, wherein an annular decorative member (16) is disposed on an outer portion of said upper end of said body (1), made of different material or colored differently from said body (1).

5. The thermo-preserving container as claimed in Claim 1, wherein said cap (2) is provided with a grip hole (21) on an upper end thereof.

6. The thermo-preserving container as claimed in Claim 1, wherein said annular connect member (20) of said cap (2) is provided with an annular connect edge (200) on an upper end thereof.

7. The thermo-preserving container as claimed in Claim 1, wherein said annular connect member (20) of said cap (2) is provided with male threads.
